# EUROPEAN PATENT APPLICATION

(11) **EP 4 661 554 A1**
(43) Date of publication of application: **10.12.2025**
(21) Application number: 23918934.3
(22) Date of filing: 30.01.2023
(51) Int. Cl.: H04W 72/231

(54) **METHOD AND APPARATUS FOR DETERMINING LOGICAL CHANNEL PRIORITY, AND DEVICE**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/073768
(87) International publication number: WO 2024/159343

(57) **Abstract**

The present invention relates to the technical field of communications. Disclosed are a method and apparatus for determining a logical channel priority, and a device. The method is executed by a terminal device. The method comprises: determining a logical channel priority of a GNSS validity duration MAC CE. According to the method, data to be transmitted can be processed on the basis of the logical channel priority of the GNSS validity duration MAC CE.

## Description

TECHNICAL FIELD Embodiments of the disclosure relate to a field of communication technologies, and particularly to a method and an apparatus for determining a logical channel priority, and a device.

### BACKGROUND

A global navigation satellite system (GNSS) position fix obtained by a terminal has a GNSS validity duration. Validity of the GNSS position fix may only last for a certain period. Once the GNSS validity duration expires, a GNSS of the terminal is outdated. The terminal needs to re-obtain the GNSS position fix.

In the related art, the terminal may report the GNSS validity duration to a network device.

### SUMMARY

Embodiments of the disclosure provide a method and an apparatus for determining a logical channel priority, and a device, which may process data to be transmitted based on a logical channel priority of a GNSS validity duration medium access control control element (MAC CE). The technical solution is as follows.

According to an aspect of embodiments of the disclosure, there is provided a method for determining a logical channel priority. The method is executed by a terminal, including:
determining a logical channel priority of a global navigation satellite system (GNSS) validity duration MAC CE.

According to an aspect of embodiments of the disclosure, there is provided an apparatus for determining a logical channel priority, including:
a determining module, configured to determine a logical channel priority of a GNSS validity duration MAC CE.

According to an aspect of embodiments of the disclosure, there is provided a terminal including a processor.

The processor is configured to a determine logical channel priority of a GNSS validity duration MAC CE.

According to an aspect of embodiments of the disclosure, there is provided a computer-readable storage medium for storing a computer program. The computer program is executed by a processor, to realize the method for determining the logical channel priority above.

According to an aspect of embodiments of the disclosure, there is provided a chip. The chip includes programmable logic circuits and/or program instructions. When the chip is run, the method for determining the logical channel priority above is realized.

According to an aspect of embodiments of the disclosure, there is provided a computer program product or a computer program. The computer program product or computer program includes computer instructions. The computer instructions are stored in the computer-readable storage medium. When a processor reads and executes the computer instructions from the computer-readable storage medium, the method for determining the logical channel priority above is realized.

A technical solution provided by the embodiments of the disclosure may bring following beneficial effects.

By defining the logical channel priority of the GNSS validity duration MAC CE, the terminal may perform logical channel prioritization (LCP) based on the logical channel priority of the GNSS validity duration MAC CE, which facilitates the terminal to process various types of data to be transmitted based on a logical channel priority of the data to be transmitted (including the GNSS validity duration MAC CE).

### BRIEF DESCRIPTION OF THE DRAWINGS

In order to clearly illustrate a technical solution of embodiments of the disclosure, a brief description is made below to accompanying drawings used in embodiments. Obviously, the accompanying drawings in the following descriptions are only some of embodiments of the disclosure, and for those skilled in the art, other drawings may be obtained according to these drawings without creative labor.
FIG. 1 is a schematic diagram illustrating a communication system according to an exemplary embodiment of the disclosure.
FIG. 2 is a schematic diagram illustrating a communication system according to an exemplary embodiment of the disclosure.
FIG. 3 is a flow chart illustrating a method for determining a logical channel priority according to an exemplary embodiment of the disclosure.
FIG. 4 is a schematic diagram illustrating a method for determining a logical channel priority according to an exemplary embodiment of the disclosure.
FIG. 5 is a schematic diagram illustrating a method for determining a logical channel priority according to an exemplary embodiment of the disclosure.
FIG. 6 is a flow chart illustrating a method for determining a logical channel priority according to an exemplary embodiment of the disclosure.
FIG. 7 is a flow chart illustrating a method for determining a logical channel priority according to an exemplary embodiment of the disclosure.
FIG. 8 is a flow chart illustrating a method for determining a logical channel priority according to an exemplary embodiment of the disclosure.
FIG. 9 is a flow chart illustrating a method for determining a logical channel priority according to an exemplary embodiment of the disclosure.
FIG. 10 is a block diagram illustrating an apparatus for determining a logical channel priority according to an exemplary embodiment of the disclosure.
FIG. 11 is a block diagram illustrating a communication device according to an exemplary embodiment of the disclosure.

### DETAILED DESCRIPTION

In order to enable the purpose, the technical solution and advantages of the disclosure clearer, detailed description will be further made below to implementations of the disclosure with reference to the accompanying drawings.

A network architecture and a service scenario described in the of the disclosure are intended to illustrate the technical solution in embodiments of the disclosure more clearly, and does not constitute a limitation on the technical solution in embodiments of the disclosure. Those skilled in the art may know that, with the evolution of a network architecture and the emergence of a new business scenario, the technical solution in embodiments of the disclosure is equally applicable to similar technical problems.

Before introducing the technical solution of the disclosure, description is made first to some technical knowledge related to the disclosure.

### Non-terrestrial Network (NTN) Technology

Currently, relevant standard organizations are researching the NTN technology. The NTN technology generally provides a communication service to a ground user in a satellite communication way. Compared with a ground cellular communication network, the satellite communication has many unique advantages. Firstly, the satellite communication is not limited by a location of a user. For example, normal terrestrial communication may not cover oceans, mountains, deserts, etc., where a communication device may not be set up or a communication coverage is not carried out due to a sparse population. However, for the satellite communication, since one satellite may cover a large area of a ground and the satellite may orbit around the earth, theoretically, every corner of the earth may be covered by the satellite communication. Secondly, the satellite communication has a significant social value. The satellite communication may cover a remote mountainous area, a poor and backward country or a region at a low cost, enabling people in these areas to enjoy advanced voice communication and a mobile internet technology, which is benefit to narrowing a digital gap with a developed region, and promoting development of these regions. Thirdly, the satellite covers a long communication distance and an increasing cost due to the communication distance does not significantly increase. Finally, the satellite communication has high stability and is not limited by natural disasters.

According to different orbital altitudes, communication satellites are classified into a low-earth orbit (LEO) satellite, a medium-earth orbit (MEO) satellite, a geosynchronous earth orbit (GEO) satellite, a high elliptical orbit (HEO) satellite, etc. At the current stage, researches are mainly made on the LEO and the GEO.

### 1. LEO

An altitude range of the LEO satellite is 500km to 1500km, and a corresponding orbital period is approximately 1.5 hours to 2 hours. A signal propagation delay of single-hop communication between users is generally less than 20ms. A maximum satellite visibility time is 20 minutes. A signal propagation distance is short, a link loss is small, and a power requirement for a user terminal is not high.

### 2. GEO

An orbital altitude of the GEO satellite is 35,786 km, and a rotation period of the GEO satellite around the earth is 24 hours. A signal propagation delay for inter-user single-hop communication is generally 250 ms.

To ensure a coverage of the satellite and improve a system capacity of an entire satellite communication system, the satellite uses multiple beams to cover the ground. One satellite may form dozens or even hundreds of beams to cover the ground, and one satellite beam may cover a ground area with a diameter of dozens of to hundreds of kilometers.

Table 1 illustrates satellite altitudes, orbits, and coverage areas of typical NTNs.

**Table 1**

| Platforms | Altitude range | Orbit | Typical beam footprint size |
|---|---|---|---|
| LEO satellite | 300 - 1500 km | Circular around the earth | 100 - 1000 km |
| MEO satellite | 7000 - 25000 km | | 100 - 1000 km |
| GEO satellite | 35 786 km | notional station keeping position fixed in terms of elevation/azimuth with respect to a given earth point | 200 - 3500 km |
| UAS platform (including HAPS) | 8 - 50 km (HAPS is 20 km) | | 5 - 200 km |
| HEO satellite | 400 - 50000 km | Elliptical around the earth | 200 - 3500 km |

### Global Navigation Satellite System (GNSS)

The GNSS generally refers to a system that realize the position fix via a satellite signal, including a global system, a regional system, and an enhanced system. In a simple term, the GNSS may provide the user with an all-weather three-dimensional coordinate, a velocity, and time information at any location on a surface of the earth or in a terrestrial space. The GNSS may locate a terminal of a user by using observed measurement on a pseudo-range, an ephemeris, a satellite transmission time of a set of satellite and a user clock difference.

When it is realized that the terminal is positioned via the GNSS, a GNSS position fix obtained by the terminal has a GNSS validity duration. After the GNSS validity duration expires, the GNSS is outdated, and the terminal needs to re-obtain the GNSS position fix. Alternatively, the terminal may report the GNSS validity duration to the network via a medium access control control element (MAC CE).

Moreover, some Internet of Things (IoT) terminals do not support a GNSS reception and a long term evolution (LTE) transmission and reception simultaneously, which causes a problem in sharing and synchronization of the GNSS validity duration between the terminal and the network device, thereby affecting an accuracy and effectiveness of the GNSS position fix.

An IoT terminal includes at least one of: a bandwidth reduction and low complexity UE (BL UE), a UE in coverage enhancement mode (UE in CE mode), or a narrow band Internet of Things (NB-IoT) UE.

For the IoT terminal, some terminals may not simultaneously support the GNSS reception and the LTE transmission and reception. The validity of the GNSS position fix obtained by the terminal may only be maintained for a certain period. After that, the GNSS of the UE is outdated. The UE needs to re-obtain the GNSS position fix. Since the terminal does not simultaneously support the GNSS reception and the LTE transmission and reception, only one of them may be performed once. In one method, the terminal returns to an idle state after the GNSS is outdated. Currently, further enhancement is considered, to allow the UE to report the GNSS validity duration via the MAC CE.

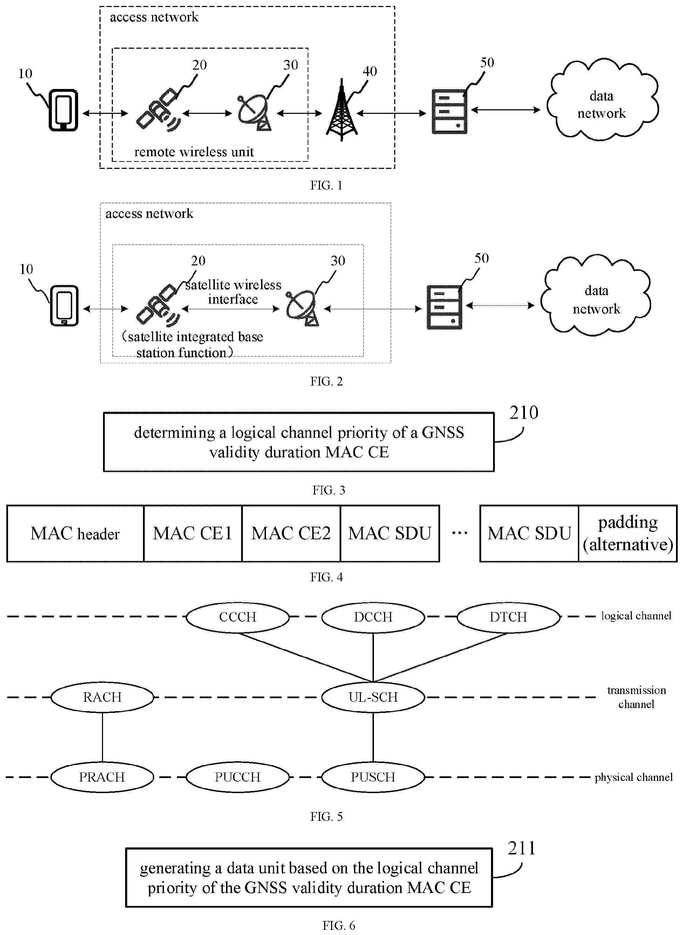

Embodiments of the disclosure may be applied in an NTN system, as illustrated in FIGs. 1 and 2.

Please refer to FIG. 1, which illustrates a schematic diagram illustrating the NTN system. The communication satellite in the NTN system is a transparent payload satellite. As illustrated in FIG. 1, the NTN system includes: a terminal 10, a satellite 20, an NTN gateway 30, an access network device 40 and a core network device 50.

The terminal 10 and the access network device 40 may communicate with each other via a radio (such as Uu interface). In an architecture illustrated in FIG. 1, the access network device 40 may be deployed on the ground, and uplink and downlink communication between the terminal 10 and the access network device 40 may be performed by transit transmission of a satellite 20 and the NTN gateway 30 (usually located on the ground). For example, in an uplink transmission, the terminal 10 sends an uplink signal to the satellite 20, the satellite 20 forwards the uplink signal to the NTN gateway 30, the NTN gateway 30 forwards the uplink signal to the access network device 40, and subsequently, the access network device 40 sends the uplink signal to the core network device 50. In a downlink transmission, a downlink signal from the core network device 50 is sent to the access network device 40, the access network device 40 sends the downlink signal to the NTN gateway 30, the NTN gateway 30 forwards the downlink signal to the satellite 20, and then the satellite 20 forwards the downlink signal to the terminal 10.

In the NTN system, the satellite 20 has functions of frequency conversion and signal amplification. The satellite 20 does not demodulate a signal of the access network device 40. The satellite 20 is similar to a repeater.

Please refer to FIG. 2, which illustrates a schematic diagram illustrating another NTN system. The communication satellite in the NTN system is a regenerative payload satellite. As illustrated in FIG. 2, the NTN system includes: a terminal 10, a satellite 20, an NTN gateway 30 and a core network device 50.

In an architecture illustrated in FIG. 2, a function of the access network device 40 is integrated in the satellite 20, that is, the satellite 20 has the function of the access network device 40. The terminal 10 and the satellite 20 may communicate with each other via a radio (such as Uu interface). The satellite 20 and the NTN gateway 30 (usually located on the ground) may communicate with each other via a satellite radio interface (SRI). In the NTN system, the satellite receives, demodulates and decodes the signal, and re-encodes and modulates the signal, and then sends a regenerative signal via a satellite frequency band.

In the architecture illustrated in FIG. 2, for an uplink transmission, the terminal 10 sends an uplink signal to the satellite 20, the satellite 20 forwards the uplink signal to the NTN gateway 30, and then the NTN gateway 30 sends the uplink signal to the core network device 50. For a downlink transmission, a downlink signal from the core network device 50 is sent to the NTN gateway 30, the NTN gateway 30 forwards the downlink signal to the satellite 20, and then the satellite 20 forwards the downlink signal to the terminal 10.

In the network architectures illustrated in FIGs. 1 and 2, the access network device 40 is a device for providing the wireless communication service for the terminal 10. The access network device 40 may establish a connection with the terminal 10, thereby communicating with each other via the connection, including an interaction between a signaling and data. There may be multiple network devices 40, and two adjacent access network devices 40 may also communicate with each other via a wired or wireless way. The terminal 10 may switch between different access network devices 40, that is, establish a connection with different access network devices 40.

Take a cellular communication network as an example. An access network device 40 in the cellular communication network may be a base station. The base station is a device deployed in an access network and for providing the wireless communication function for the terminal 10. The base station may include various forms of macro base stations, micro base stations, relay stations, access points, etc. Names of a device with a base station function may be different in systems using different wireless access technologies. For example, in a 5G NR system, the device is called gNodeB or gNB. With the evolution of the communication technologies, the name "base station" may change. For convenience of description, in embodiments of the disclosure, the device for providing the wireless communication function for the terminal 10 is collectively referred to as a base station or an access network device.

In addition, the terminal 10 in embodiments of the disclosure may include various handheld devices, vehicle-mounted devices, wearable devices and computing devices with the wireless communication function or other processing devices connected to a wireless modem, as well as various forms of user equipment (UEs), mobile stations (MSs), terminals and so on. For convenience of description, the above devices are collectively referred to as terminal in embodiments of the disclosure. In embodiments of the disclosure, in some places, the "UE" is used to represent "terminal". In embodiments of the disclosure, the "network device" may be an access network device (such as base station) or a satellite.

In addition, in a 5G NTN system, the NTN system may include multiple satellites 20. One satellite 20 may cover a certain area of the ground and provide a wireless communication service for the terminal 10 in the ground. Moreover, the satellite 20 may orbit around the earth. By deploying the multiple satellites 20, a communication coverage may be achieved for different areas on a surface of the earth.

The technical solution in embodiments of the disclosure may be applied to various communication systems, such as: a global system of mobile communication (GSM)) system, a code division multiple access (CDMA) system, a wideband code division multiple access (WCDMA) system, a general packet radio service (GPRS), an LTE system, an LTE frequency division duplex (FDD) system, an LTE time division duplex (TDD) system, an advanced long term evolution (LTE-A) system, a universal mobile telecommunication system (UMTS), a worldwide interoperability for microwave access (WiMAX) communication system, a 5th generation (5G) mobile communication system, a new radio (NR) system, an evolved system in an NR system, an LTE-based access to unlicensed spectrum (LTE-U) system, an NR-based access to unlicensed spectrum (NR-U) system, a terrestrial network (TN) system, a NTN system, wireless local area networks (WLAN), a wireless fidelity (Wi-Fi), a cellular IoT system, a cellular passive IoT system; may also be applied to a subsequent evolved system of the 5G NR system; and may also be applied to a beyond fifth generation (B5G), 6G, and a subsequent evolved system. In some embodiments of the disclosure, the "NR" may also be referred to as 5G NR system or 5G system. The 5G mobile communication system may include non-standalone (NSA) and/or standalone (SA).

The technical solution in embodiments of the disclosure may also be applied to a machine type communication (MTC), a long term evolution-machine communication (LTE-M), a device-to-device (D2D) network, a machine to machine (M2M) networks, an IoT network, and other networks. The IoT network may include such as a vehicle to everything (V2X). Communication ways in a V2X system are collectively referred to as a vehicle to X, where X may represent any thing. For example, the V2X may include: vehicle to vehicle (V2V) communication, vehicle to infrastructure (V2I) communication, vehicle to pedestrian (V2P) communication or vehicle to network (V2N) communication, etc.

The NTN communication system in the embodiment may be applied to, but not limited to, at least one of: a downlink time difference of arrival (DL-TDOA) positioning method, an uplink time difference of arrival (UL-TDOA) positioning method, or a multi-round trip time (Multi-RTT) positioning method.

In addition, in the embodiments of the disclosure, the terms "network" and "system" are often used interchangeably, but those skilled in the art may understand their meanings.

Please refer to FIG. 3, which illustrates a flow chart illustrating a method for generating a medium access control packet data unit (MAC PDU) in an embodiment of the disclosure. Description is made in the embodiment by taking that this method applied to the terminal in the communication system as illustrated in FIG. 1 or FIG. 2 as an example. The method may include the following.

At S210, a logical channel priority of a GNSS validity duration MAC CE is determined.

Alternatively, the terminal determines the logical channel priority of the GNSS validity duration MAC CE and generates a data unit based on the logical channel priority of the GNSS validity duration MAC CE. For example, the data unit may be an MAC PDU or a medium access control protocol data unit (MAC PDU).

Alternatively, the terminal includes a medium access control (MAC) entity (MAC layer). The MAC entity performs logical channel prioritization (LCP) based on logical channel priorities of various MAC CEs and data to generate the MAC PDU. The logical channel priorities of various MAC CEs and data include the logical channel priority of the GNSS validity duration MAC CE.

For example, the logical channel priority is used to determine a precedence of various MAC CEs and/or data. The higher a logical channel priority of an MAC CE/data is, the more the MAC CE/data will be preferentially carried in the data unit. That is, based on the logical channel priority of the MAC CE and/or data, the MAC CE and/or data with a high logical channel priority is preferentially to be carried in the data unit, thereby generating the data unit. For example, the terminal may send the data unit to the network device via a radio resource control (RRC) message, or the terminal may send the data unit to the network device via a random access message.

Alternatively, FIG. 4 illustrates an exemplary MAC PDU (or called MAC TB) structure. The MAC PDU includes: an MAC header, at least one MAC CE, at least one medium access control service data unit (MAC SDU), and padding.

Alternatively, the MAC entity is used to map logical channel data to a transmission channel and transmit the transmission channel mapped and transport block (TB) data to a physical layer (PHY). For example, as illustrated in FIG. 5, for the uplink transmission, one transmission channel may correspond to multiple logical channels, such as, a common control channel (CCCH) of the logical channel, a dedicated control channel (DCCH), an uplink shared channel (UL-SCH) of the transmission channel corresponding to a dedicated traffic channel (DTCH).

Alternatively, a multiplexing function of the MAC layer combines data of the multiple logical channels into one transmission channel, that is, multiplexes multiple MAC SDUs and MAC CEs into one MAC PDU and sends the MAC PDU via a PHY channel. When all the multiple logical channels have data to be sent and a total amount of the data exceeds a transmission capacity, a problem which logical channel should be prioritized for transmission is appeared, which is called the LCP. The LCP is performed based on the logical channel priority in the MAC layer, data/control information with a high priority is loaded preferentially to generate the MAC PDU.

Ranking the logical channel priorities: In one alternative embodiment, in an LCP process, the MAC entity should consider logical channel priorities of the MAC CE and data in a following order (the logical channel priorities are ranked from high to low, i.e., in a descending order):
- an MAC CE for a cell radio network temporary identity (C-RNTI), or data from an uplink common control channel (UL-CCCH);
- an MAC CE for a data volume and power headroom report (DPR);
- an MAC CE for a semi-persistent scheduling (SPS) activation confirmation message;
- an MAC CE for autonomous uplink (AUL) confirmation;
- an MAC CE for a timing advance report (TAR);
- an MAC CE for a buffer status report (BSR), with exception of a BSR included for padding;
- an MAC CE for a power headroom report (PHR), an extended PHR, or a dual connectivity PHR;
- an MAC CE for a sidelink BSR, with exception of a sidelink BSR included for padding;
- an MAC CE for a downlink channel quality report (DCQR) and an access stratum release assistance indication (AS RAI), with exception of when the DCQR is to be included in an Msg3 (random access message 3);
- data from any logical channel, except data from the UL-CCCH;
- an MAC CE for a DCQR and an AS RAI, when the DCQR is to be included in the Msg3;
- an MAC CE for a recommended bit rate query;
- an MAC CE for a BSR included for padding; and
- an MAC CE for a sidelink BSR included for padding.

For example, terms involved are explained as follows.
1. C-RNTI: the C-RNTI is a dynamic identity assigned by the access network device to the terminal. The C-RNTI uniquely identifies a terminal accessing one cell, and the C-RNTI is valid for a terminal in a connected state.
2. BSR control information unit: the control information unit is crucial for uplink scheduling. The terminal uses the control information unit to inform the access network device of an amount of data to be sent. The access network device needs to prepare resources such as a memory space based on an indication. A BSR MAC CE includes two types: a short BSR and truncated BSR, and a long BSR. The short BSR and truncated BSR includes a logical channel group ID (LCGID) field and an indication field of a corresponding cache size field. The long BSR includes four cache size fields, respectively corresponding to LCGIDs #0 to #3. A BSR format is identified by a field identity of an LCID in a corresponding MAC PDU header. The LCGID field indicates a logical channel group currently reporting a buffer status. A field length is 2 bits. A buffer size field defines a total amount of data of all logical channels in one logical channel group after an MAC PDU is constructed. A data volume is in a unit of byte, including all valid data available for transmission at a radio link control (RLC) layer and a packet data convergence protocol (PDCP) layer. The field length is 6 bits, indicating value ranges of 64 possible cache data amounts.

Padding BSR: the padding BSR is allocated with an UL grant. When the number of padding bits (one TB is one MAC PDU, and if there is unused space, an MAC needs to fill the unused space with 0) is equal to or greater than a size of "BSR MAC CE + corresponding subheader", the UE may use these bits to send the BSR, and the BSR is called a "padding BSR" or a "BSR included for padding".

BSR cancellation condition: when an UL grant within a transmission time interval (TTI) may accommodate all pending data in an UL buffer but is not sufficient to accommodate a sum of an extra BSR MAC CE and bits of a subheader corresponding to the extra BSR MAC CE, all triggered BSRs may be cancelled by the UE; when one BSR is included in one MAC PDU to be transmitted, all triggered BSRs may be cancelled.

3. Power headroom (PH): a difference between a maximum transmission power allowed by the terminal and a physical uplink shared channel (PUSCH) transmission power evaluated currently, which may be simply expressed by a formula: PH = UEAllowedMaxTransPower (the maximum transmission power allowed by the UE) - PuschPower (the PUSCH transmission power evaluated currently). The PH indicates how much transmission power which the UE may still use in addition to the transmission power used in current PUSCH transmission. A unit of the PH is dB, and a range of the PH is [-23dB, +40dB]. If the PH is a negative value, it means that the network schedules a data transmission rate greater than an available transmission power of the UE at that time, for the UE. A calculation of the PH needs the transmission power of the PUSCH, so the PH is only calculated in a transmission subframe of the PUSCH. A reason for defining a PH value is that the PH value may be served as a reference for the access network device to allocate an uplink radio bearer (RB) resource. However, an algorithm design of the reference, or how the PH value affects scheduling of the eNB, is determined by algorithms of device manufacturers. When the PH value is a negative value, it indicates that the current PUSCH transmission power exceeds the maximum transmission power allowed by the UE. In a following scheduling, it may be considered that allocation of the RB resource for the UE may be reduced. When the PH value is a positive value, the number of RBs allocated subsequently may continuously increase.

PHR: the PHR is a process that the terminal reports the PH to the network. A value of the PHR is sent via an MAC CE, so an MAC CE related to the process is also called PHR MAC CE. The PHR MAC CE occupies one byte fixedly, in which 2 high bits are R bits, that is, reserved bits, which is temporarily unused, and only 6 low bits are used to store 64 PH level values from 0 to 63.

Extended PHR: to solve a problem that the network device does not know a true transmission power of the terminal in PH reporting, an extended PHR MAC CE is introduced based on an original PHR reporting structure. In a new reporting structure, a maximum transmission power P_{CMAX} of the terminal is introduced. Before an original reporting structure, multiple existence indications Cᵢ of the PHR are added. Cᵢ = 1 indicates that a serving cell with a ServCellIndex i has the PH reporting. One of the 2 reserved bits R in 8 bits in the original reporting structure is redefined as V, indicating whether a PH calculation way is based on real PUSCH transmission. After the original reporting structure, 8 bits for reporting the maximum transmission power P_{CMAX} of the terminal are added, in which first 2 bits are reserved bits, the maximum transmission power P_{CMAX} occupies last 6 bits, with a value of the maximum transmission power spacing at 1 dB and covering from -29 dBm to 33 dBm.

Dual connectivity (DC) PHR: first indication information (such as parameter Ue-CA-Pcmax _ref-for-PHR) is defined based on the original PHR reporting structure. That is, the first indication information may be used to indicate a preset transmission power of the terminal in a carrier aggregation (CA) scenario or a DC scenario.
4. DPR: the DPR to be transmitted is a report element that includes a BSR function and a PHR function simultaneously. The element only occupies 1 byte and is only used in an msg3 in a random access process triggered when a terminal in an idle state generates data to be transmitted (a terminal in a connected state does not support to use the DPR in a random access process triggered by a loss of synchronization or a scheduling request (SR)). Since a control plane optimization solution introduced by an NB-IoT may upload service data in an msg5, one DPR needs to be introduced to the msg3 to assist resource scheduling and power control of the access network. The DPR is reported in a form of MAC CE in the msg3 (message 3). To save overhead of the msg3, in a current NB-IoT, no dedicated MAC PDU subheader is set for the DPR, but the DPR shares a same MAC subheader with a CCCH MAC SDU, carrying an LCID being CCCH ("00000"). The DPR MAC CE is defaulted to be placed before the CCCH MAC SDU in the Msg3. Currently, the DPR may only share an LCID belonging to the CCCH with the CCCH, so the DPR may not be used independently aparting from the CCCH MAC SDU.
5. SPS: the semi-persistent scheduling, abbreviated as SPS, is also called semi-static scheduling. Different from dynamic scheduling where a wireless resource is allocated to the UE for each TTI (specified via a physical downlink control channel (PDCCH)), the SPS allows performing semi-static configuration on the wireless resource and periodically allocating the resource to a certain specific UE. That is, the access network device uses a PDCCH scrambled by an SPS C-RNTI to specify the wireless resource (called an SPS resource here) used by the UE in a certain TTI. Then, the UE uses the SPS resource to receive or send data after each period. The access network device does not need to issue the PDCCH in a subframe (called an SPS subframe here) to specify an allocated resource. Due to a feature "allocating once, using multiple times" of the SPS, there no need to issue downlink control information (DCI) for the UE at each TTI, thereby reducing a corresponding PDCCH overhead. The SPS has a slightly poorer flexibility, but has low overhead of a control signaling. The SPS is suitable for a service with an insignificant burst characteristic, effectively guarantees the service with a rate requirement, and is mainly used for a periodic small packet service.
6. AUL: the AUL is an uplink transmission using an unlicensed spectrum resource. Without scheduling of the network side, the terminal may perform the uplink transmission on an AUL resource. Generally, the access network device may issue an AUL configuration to the terminal via the RRC signaling. The AUL configuration is the configuration at a serving cell level. In detail, the access network device configures a hybrid automatic repeat reQuest (HARQ) process for the AUL and a subframe for the AUL of a certain serving cell for the terminal via the RRC signaling.
7. TAR: A timing advance (TA) value is used for the uplink transmission of the terminal, indicating that the terminal sends a data packet in advance of a corresponding time based on a corresponding instruction. The terminal needs to report the TAR to the network device, to enable the network device to know a round-trip time (RTT) of a UE-gNB, such that the network device may determine an uplink scheduling occasion or UL acknowledgement (ACK)/negative acknowledgement (NACK) feedback occasion based on the RTT.
8. Recommended bit rate query: the terminal sends a recommended bit rate query to the access network device, to provide a specific bit rate recommendation value for a logical channel to the access network device. Therefore, the terminal may use the recommended bit rate query to determine whether the access network device may provide the bit rate recommendation value, or the terminal requests the access network device to indicate the bit rate recommendation value determined by the access network device.

Alternatively, based on ranking the logical channel priority above, the logical channel priority of the GNSS validity duration MAC CE is further introduced. After the logical channel priority of the GNSS validity duration MAC CE is introduced, description will be made in following embodiments to how to update the rank of the logical channel priorities.

Alternatively, a GNSS validity duration is a validity duration of the GNSS position fix. The GNSS validity duration may be pre-configured by a GNSS system or agreed by a protocol, which is not limited in the disclosure. For example, the terminal obtains the GNSS validity duration from a global positioning system (GPS) module of the terminal. The GNSS position fix is positioning information of the terminal obtained by the terminal via the GNSS.

Alternatively, when the GNSS validity duration ends, that is, the GNSS is outdated, and the GNSS positioning is invalid. The terminal needs to re-obtain the GNSS position fix. That is, that the GNSS is outdated indicates that the GNSS position fix exceeds the validity duration of the GNSS.

Alternatively, the terminal determines the logical channel priority of the GNSS validity duration MAC CE based on the protocol; or the terminal determines the logical channel priority of the GNSS validity duration MAC CE based on configuration information of the network device; or the terminal determines the logical channel priority of the GNSS validity duration MAC CE based on pre-configuration of the network device.

In conclusion, with the technical solution in the embodiments, by defining the logical channel priority of the GNSS validity duration MAC CE, the terminal may perform LCP based on the logical channel priority of the GNSS validity duration MAC CE, which facilitates the terminal to process various types of data to be transmitted based on a logical channel priority of the data to be transmitted (including the GNSS validity duration MAC CE).

For example, based on the above description for S210, the disclosure also provides an exemplary embodiment of a ranking way for the logical channel priority of the GNSS validity duration MAC CE.

Please refer to FIG. 3, which is a flow chart illustrating a method for determining a logical channel priority according to an embodiment of the disclosure. Embodiments take that such method is applied to the terminal in the communication system as illustrated in FIG. 1 or FIG. 2 as an example for illustration. The method may include the following.

At S210, a logical channel priority of a GNSS validity duration MAC CE is determined.

In an alternative embodiment, the logical channel priority of the GNSS validity duration MAC CE may follow at least one of following ranking ways.
(1) The logical channel priority of the GNSS validity duration MAC CE is lower than or equal to a logical channel priority of a C-RNTI MAC CE; and/or, the logical channel priority of the GNSS validity duration MAC CE is lower than or equal to a logical channel priority of data from a UL-CCCH. The C-RNTI MAC CE and the data from the UL-CCCH may have the logical channel priorities in a same level, or may have the logical channel priorities in different levels.
(2) The logical channel priority of the GNSS validity duration MAC CE is lower than or equal to a logical channel priority of a TAR MAC CE.
(3) The logical channel priority of the GNSS validity duration MAC CE is lower than or equal to a logical channel priority of a BSR MAC CE. Alternatively, the BSR MAC CE does not include a BSR MAC CE for padding.
(4) The logical channel priority of the GNSS validity duration MAC CE is lower than or equal to a logical channel priority of data from any logical channel except the data from the UL-CCCH.
(5) The logical channel priority of the GNSS validity duration MAC CE is lower than or equal to a logical channel priority of an MAC CE for padding. Alternatively, the MAC CE for padding includes at least one of: a sidelink BSR MAC CE for padding, or a BSR MAC CE for padding.
(6) The logical channel priority of the GNSS validity duration MAC CE is greater than or equal to a logical channel priority of an MAC CE for padding. Alternatively, the MAC CE for padding includes at least one of: a sidelink BSR MAC CE for padding, or a BSR MAC CE for padding.
(7) The logical channel priority of the GNSS validity duration MAC CE is greater than or equal to a logical channel priority of an MAC CE for a recommended bit rate query.
(8) The logical channel priority of the GNSS validity duration MAC CE is greater than or equal to a logical channel priority of data from any logical channel except the data from the UL-CCCH.
(9) The logical channel priority of the GNSS validity duration MAC CE is greater than or equal to a logical channel priority of an MAC CE for a sidelink BSR. Alternatively, the sidelink BSR MAC CE does not include a sidelink BSR MAC CE for padding.
(10) The logical channel priority of the GNSS validity duration MAC CE is greater than or equal to a logical channel priority of an MAC CE for reporting a PH. The MAC CE for reporting the PH includes at least one of: a PHR MAC CE, an extended PHR MAC CE, or a dual connectivity PHR MAC CE. The PHR MAC CE, the extended PHR MAC CE, and the dual connectivity PHR MAC CE may have the logical channel priorities in a same level, or the PHR MAC CE, the extended PHR MAC CE, the dual connectivity PHR MAC CE, and the data from the UL-CCCH may have the logical channel priority in different levels.
(11) The logical channel priority of the GNSS validity duration MAC CE is greater than or equal to a logical channel priority of a BSR MAC CE. Alternatively, the BSR does not include a BSR for padding.
(12) The logical channel priority of the GNSS validity duration MAC CE is greater than or equal to a logical channel priority of a TAR MAC CE.
(13) The logical channel priority of the GNSS validity duration MAC CE is lower than or equal to a logical channel priority of an MAC CE for a DPR.
(14) The logical channel priority of the GNSS validity duration MAC CE is greater than or equal to a logical channel priority of an MAC CE for a DPR.
(15) The logical channel priority of the GNSS validity duration MAC CE is lower than or equal to a logical channel priority of an MAC CE for SPS activation confirmation message.
(16) The logical channel priority of the GNSS validity duration MAC CE is greater than or equal to a logical channel priority of an MAC CE for SPS activation confirmation message.
(17) The logical channel priority of the GNSS validity duration MAC CE is lower than or equal to a logical channel priority of an MAC CE for AUL confirmation.
(18) The logical channel priority of the GNSS validity duration MAC CE is greater than or equal to a logical channel priority of an MAC CE for AUL confirmation.
(19) The logical channel priority of the GNSS validity duration MAC CE is lower than or equal to a logical channel priority of an MAC CE for a downlink channel quality report (DCQR) and an AS RAI, alternatively, with exception of when the DCQR is to be included in Msg3(random access message 3).
(20) The logical channel priority of the GNSS validity duration MAC CE is greater than or equal to a logical channel priority of an MAC CE for a DCQR and an AS RAI, , alternatively, with exception of when the DCQR is to be included in Msg3(random access message 3).
(21) The logical channel priority of the GNSS validity duration MAC CE is lower than or equal to a logical channel priority of a sidelink BSR MAC CE. Alternatively, the sidelink BSR does not include a sidelink BSR for padding.
(22) The logical channel priority of the GNSS validity duration MAC CE is lower than or equal to a logical channel priority of an MAC CE for a DCQR and an AS RAI when the DCQR is to be included in an Msg3.
(23) The logical channel priority of the GNSS validity duration MAC CE is greater than or equal to a logical channel priority of an MAC CE for a DCQR and an AS RAI when the DCQR is to be included in an Msg3.
(24) The logical channel priority of the GNSS validity duration MAC CE is lower than or equal to a logical channel priority of an MAC CE for a recommended bit rate query.
(25) The logical channel priority of the GNSS validity duration MAC CE is greater than or equal to a logical channel priority of a C-RNTI MAC CE; and/or, the logical channel priority of the GNSS validity duration MAC CE is greater than or equal to a logical channel priority of data from an UL-CCCH.
(26) The logical channel priority of the GNSS validity duration MAC CE is lower than or equal to a logical channel priority of an MAC CE for reporting a PH. The MAC CE for reporting the PH includes at least one of: a PHR MAC CE, an extended PHR MAC CE, or a dual connectivity PHR MAC CE.

In another alternative embodiment, the logical channel priority of the GNSS validity duration MAC CE may follow at least one of following ranking ways.
(1)The logical channel priority of the GNSS validity duration MAC CE is lower than or equal to a logical channel priority of a C-RNTI MAC CE; and/or, the logical channel priority of the GNSS validity duration MAC CE is lower than or equal to a logical channel priority of data from a UL-CCCH. The C-RNTI MAC CE and the data from the UL-CCCH may have the logical channel priorities in a same level, or may have the logical channel priorities in different levels.
(2) The logical channel priority of the GNSS validity duration MAC CE is lower than or equal to a logical channel priority of a TAR MAC CE.
(3) The logical channel priority of the GNSS validity duration MAC CE is lower than or equal to a logical channel priority of a BSR MAC CE. The BSR does not include a BSR for padding.
(4) The logical channel priority of the GNSS validity duration MAC CE is lower than or equal to a logical channel priority of data from any logical channel except the data from the UL-CCCH.
(5) The logical channel priority of the GNSS validity duration MAC CE is lower than or equal to a logical channel priority of a sidelink BSR MAC CE for padding.
(6) The logical channel priority of the GNSS validity duration MAC CE is greater than or equal to a logical channel priority of a BSR MAC CE for padding.
(7) The logical channel priority of the GNSS validity duration MAC CE is greater than or equal to a logical channel priority of an MAC CE for a recommended bit rate query.
(8) The logical channel priority of the GNSS validity duration MAC CE is greater than or equal to a logical channel priority of data from any logical channel except the data from the UL-CCCH.
(9) The logical channel priority of the GNSS validity duration MAC CE is greater than or equal to a logical channel priority of a sidelink BSR MAC CE. The sidelink BSR does not include a sidelink BSR for padding.
(10) The logical channel priority of the GNSS validity duration MAC CE is greater than or equal to a logical channel priority of a PHR MAC CE; and/or, the logical channel priority of the GNSS validity duration MAC CE is greater than or equal to a logical channel priority of an extended PHR MAC CE; and/or, the logical channel priority of the GNSS validity duration MAC CE is greater than or equal to a dual connectivity PHR MAC CE, in which the PHR MAC CE, the extended PHR MAC CE, and the dual connectivity PHR MAC CE may have the logical channel priorities in a same level, or the PHR MAC CE, the extended PHR MAC CE, the dual connectivity PHR MAC CE and the data from the UL-CCCH may have the logical channel priorities in different levels.
(11) The logical channel priority of the GNSS validity duration MAC CE is greater than or equal to a logical channel priority of a BSR MAC CE. The BSR does not include a BSR for padding.
(12) The logical channel priority of the GNSS validity duration MAC CE is greater than or equal to a logical channel priority of a TAR MAC CE.
(13) The logical channel priority of the GNSS validity duration MAC CE is lower than or equal to a logical channel priority of a DPR MAC CE.
(14) The logical channel priority of the GNSS validity duration MAC CE is greater than or equal to a logical channel priority of a DPR MAC CE.
(15) The logical channel priority of the GNSS validity duration MAC CE is lower than or equal to a logical channel priority of an MAC CE for SPS activation confirmation message.
(16) The logical channel priority of the GNSS validity duration MAC CE is greater than or equal to a logical channel priority of an MAC CE for SPS activation confirmation message.
(17) The logical channel priority of the GNSS validity duration MAC CE is lower than or equal to a logical channel priority of an MAC CE for AUL confirmation.
(18) The logical channel priority of the GNSS validity duration MAC CE is greater than or equal to a logical channel priority of an MAC CE for AUL confirmation.
(19) The logical channel priority of the GNSS validity duration MAC CE is lower than or equal to a logical channel priority of an MAC CE for a DCQR and an AS RAI, with exception of when the DCQR is to be included in Msg3(random access message 3).
(20) The logical channel priority of the GNSS validity duration MAC CE is greater than or equal to a logical channel priority of an MAC CE for a DCQR and an AS RAI, with exception of when the DCQR is to be included in Msg3(random access message 3).
(21) The logical channel priority of the GNSS validity duration MAC CE is lower than or equal to a logical channel priority of a sidelink BSR MAC CE, in which the sidelink BSR does not include a sidelink BSR for padding.
(22) The logical channel priority of the GNSS validity duration MAC CE is lower than or equal to a logical channel priority of an MAC CE for a DCQR and an AS RAI when the DCQR is to be included in an Msg3.
(23) The logical channel priority of the GNSS validity duration MAC CE is greater than or equal to a logical channel priority of an MAC CE for a DCQR and an AS RAI when the DCQR is to be included in an Msg3.
(24) The logical channel priority of the GNSS validity duration MAC CE is lower than or equal to a logical channel priority of an MAC CE for a recommended bit rate query.
(25) The logical channel priority of the GNSS validity duration MAC CE is greater than or equal to a logical channel priority of a sidelink BSR MAC CE for padding.
(26) The logical channel priority of the GNSS validity duration MAC CE is lower than or equal to a logical channel priority of a BSR MAC CE for padding.
(27) The logical channel priority of the GNSS validity duration MAC CE is greater than or equal to a logical channel priority of a C-RNTI MAC CE; and/or, the logical channel priority of the GNSS validity duration MAC CE is greater than or equal to a logical channel priority of data from an UL-CCCH, in which the C-RNTI MAC CE and the data from the UL-CCCH may have the logical channel priorities in a same level, or may have the logical channel priorities in different levels.
(28) The logical channel priority of the MAC CE for the GNSS validity duration is lower than or equal to a logical channel priority of a PHR MAC CE; and/or, the logical channel priority of the GNSS validity duration MAC CE is lower than or equal to a logical channel priority of an extended PHR MAC CE; and/or, the logical channel priority of the GNSS validity duration MAC CE is lower than or equal to a logical channel priority of a dual connectivity PHR MAC CE, in which the PHR MAC CE, the extended PHR MAC CE, and the dual connectivity PHR MAC CE may have the logical channel priorities in a same level, or the PHR MAC CE, the extended PHR MAC CE, the dual connectivity PHR MAC CE, and the data from the UL-CCCH may have the logical channel priorities in different levels.

Referring to an above description of the ranking way, in an alternative ranking way, in the case that the logical channel priority of the GNSS validity duration MAC CE is lower than the logical channel priority of the C-RNTI MAC CE and the data from the UL-CCCH, and is greater than the logical channel priority of the MAC CE for the DPR, an MAC entity should consider logical channel priorities of the MAC CE and data in a following order (the logical channel priorities are ranked from high to low, i.e., in a descending order):
- 1. an MAC CE for a cell radio network temporary identity (C-RNTI), or data from an UL-CCCH;
- 2. an MAC CE for a GNSS validity duration;
- an MAC CE for a DPR;
- an MAC CE for an SPS activation confirmation message;
- an MAC CE for AUL confirmation;
- an MAC CE for a TAR;
- an MAC CE for a BSR, with exception of a BSR included for padding;
- an MAC CE for a PHR, an extended PHR, or a dual connectivity PHR;
- an MAC CE for a sidelink BSR, with exception of a sidelink BSR included for padding;
- an MAC CE for a DCQR and an AS RAI, with exception of when the DCQR is to be included in an Msg3 (random access message 3);
- data from any logical channel, except data from the UL-CCCH;
- an MAC CE for a DCQR and an AS RAI, when the DCQR is to be included in the Msg3;
- an MAC CE for a recommended bit rate query;
- an MAC CE for a BSR included for padding; and
- an MAC CE for a sidelink BSR included for padding.

In another alternative ranking way, in the case that the logical channel priority of the GNSS validity duration MAC CE is lower than the logical channel priority of the MAC CE for the TAR, and is greater than the logical channel priority of the MAC CE for the BSR, an MAC entity should consider logical channel priorities of the MAC CE and data in a following order (the logical channel priorities are ranked from high to low, i.e., in a descending order):
1. - an MAC CE for a cell radio network temporary identity (C-RNTI), or data from an UL-CCCH;
   - an MAC CE for a DPR;
   - an MAC CE for an SPS activation confirmation message;
   - an MAC CE for AUL confirmation;
   - an MAC CE for a TAR;
   - 1. a MAC CE for a GNSS validity duration;
   - an MAC CE for a BSR, with exception of a BSR included for padding;
   - an MAC CE for a PHR, an extended PHR, or a dual connectivity PHR;
   - an MAC CE for a sidelink BSR, with exception of a sidelink BSR included for padding;
   - an MAC CE for a DCQR and an AS RAI, with exception of when the DCQR is to be included in an Msg3 (random access message 3);
   - data from any logical channel, except data from the UL-CCCH;
   - an MAC CE for a DCQR and an AS RAI, when the DCQR is to be included in the Msg3;
   - an MAC CE for a recommended bit rate query;
   - an MAC CE for a BSR included for padding; and
   - an MAC CE for a sidelink BSR included for padding.

Alternatively, other ranking way may refer to ranking ways illustrated in above two examples to obtain a new order of the logical channel priority of the MAC CE and/or data.

In conclusion, with the technical solution in the embodiments, by defining the logical channel priority of the GNSS validity duration MAC CE, the terminal may perform LCP based on the logical channel priority of the GNSS validity duration MAC CE, which facilitates the terminal to process various types of data to be transmitted based on a logical channel priority of the data to be transmitted (including the GNSS validity duration MAC CE).

For example, based on an above description for S210, the disclosure also provides an exemplary embodiment where an MAC PDU is generated based on the logical channel priority of the GNSS validity duration MAC CE.

Please refer to FIG. 6, which is a flow chart illustrating a method for determining a logical channel priority according to an embodiment of the disclosure. The embodiment takes that the method is applied to the terminal in the communication system illustrated in FIG. 1 or FIG. 2 as an example for illustration. The method may include the following.

At S211, a data unit is generated based on the logical channel priority of the GNSS validity duration MAC CE.

For example, S211 may be independently realized as an embodiment; or, S211 may be realized as an embodiment in combination with S210, in which S210 is performed before S211.

For example, the logical channel priority of the GNSS validity duration MAC CE in embodiments may refer to a relevant description in above embodiments, such as the relevant explanation of the logical channel priority of the GNSS validity duration MAC CE at S210.

The data unit is configured to carry data sent by the terminal to the network device. For example, the data unit is configured to carry the GNSS validity duration MAC CE. Alternatively, the data unit may be an MAC PDU.

In the case that the logical channel priority of the GNSS validity duration MAC CE is high, the GNSS validity duration MAC CE may be preferentially carried to the MAC PDU, then the MAC PDU generated may include the GNSS validity duration MAC CE. Alternatively, in the case that the logical channel priority of the GNSS validity duration MAC CE is low, if the MAC CE/data with a higher logical channel priority fills up the MAC PDU, the MAC PDU generated may not include the GNSS validity duration MAC CE.

Alternatively, the terminal (MAC layer) may perform LCP according to any one of the ranking ways of the logical channel priority of the GNSS validity duration MAC CE in the above embodiments, and the data unit generated includes the GNSS validity duration MAC CE, for example, the data unit may be an MAC PDU.

Alternatively, the MAC layer includes a multiplexing/demultiplexing entity and a logical channel priority entity. The multiplexing and demultiplexing entity is responsible for composing and decomposing the MAC PDU, and performing multiplexing/demultiplexing of data from several logical channels/one transmission channel. When a wireless resource for new transmission is allocated, the logical channel priority entity may indicate the multiplexing and demultiplexing entity to generate the MAC PDU from an MAC SDU.

Alternatively, one MAC PDU includes at least one of: the MAC CE, an MAC header, the MAC SDU, or the padding. The MAC header includes one or more MAC subheaders. Each MAC subheader corresponds to an MAC PDU, an MAC CE, or padding.

Alternatively, the terminal generates the MAC PDU based on a result of the logical channel priority. The MAC PDU only includes one MAC CE carrying the GNSS validity duration. The MAC CE included in the MAC PDU is a first MAC CE.

Alternatively, the first MAC CE is any one of at least one MAC CE carrying the GNSS validity duration, or one selected based on a specific rule (such as a priority rule).

Alternatively, the GNSS validity duration includes at least one of: a remaining GNSS validity duration, a total GNSS validity duration, a GNSS invalidity duration. A start time of the remaining GNSS validity duration refers to a sending time of the first MAC CE. A start time of the total GNSS validity duration refers to a time when the GNSS positioning fix is obtained. The GNSS invalidity duration refers to a time when the GNSS positioning fix is invalid, a start time refers to a time when the GNSS positioning fix is obtained, and an ending time refers to a sending time of the first MAC CE.

For example, after the data unit is generated in the MAC layer based on the logical channel priority of the GNSS validity duration MAC CE, the MAC layer transmits the data unit to the PHY. The PHY sends the data unit to the network device via an RRC message or a random access message.

Alternatively, the terminal may generate the RRC message based on the logical channel priority of the GNSS validity duration MAC CE, and the RRC message carries the GNSS validity duration. For example, the MAC layer generates the MAC PDU based on the logical channel priority of the GNSS validity duration MAC CE, and the MAC PDU includes the GNSS validity duration. The MAC layer transmits the MAC PDU to the PHY. The PHY generates the RRC message based on the MAC PDU and sends the RRC message to the network device, and the RRC message carries the GNSS validity duration.

Alternatively, the terminal may generate a random access message based on the logical channel priority of the GNSS validity duration MAC CE, and the random access message carries the GNSS validity duration. For example, the MAC layer generates the MAC PDU based on the logical channel priority of the GNSS validity duration MAC CE, where the MAC PDU includes the GNSS validity duration; the MAC layer transmits the MAC PDU to the PHY; the PHY generates the random access message based on the MAC PDU and sends the random access message to the network device, in which the random access message carries the GNSS validity duration.

In conclusion, with the technical solution in the embodiments, by defining the logical channel priority of the GNSS validity duration MAC CE, the terminal may generate the MAC PDU by performing LCP based on the logical channel priority of the GNSS validity duration MAC CE, which facilitates the terminal to generate the MAC PDU by handling various types of data to be transmitted based on the logical channel priority.

For example, embodiments of the disclosure also provide a method for the terminal to report a GNSS validity duration to the network device.

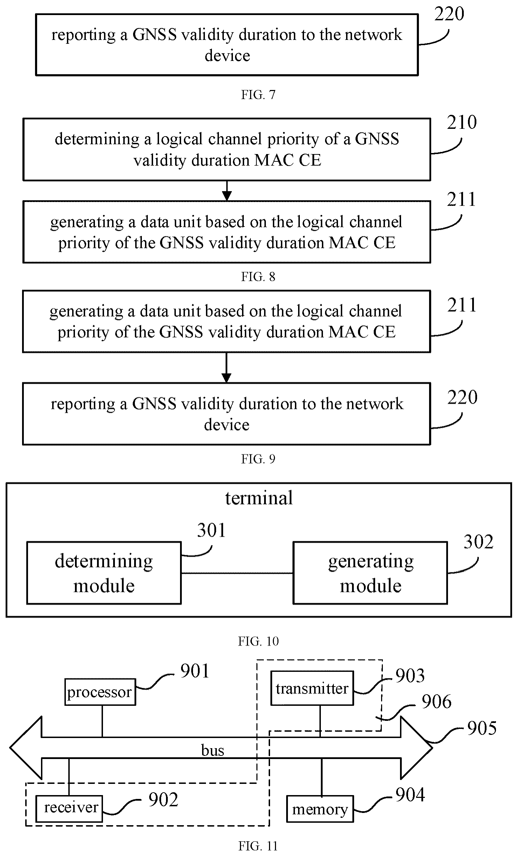

Please refer to FIG. 7, which is a flow chart illustrating a method for determining a logical channel priority according to an embodiment of the disclosure. The embodiment takes that the method is applied to the terminal in the communication system illustrated in FIG. 1 or FIG. 2 as an example for illustration. The method may include the following.

At S220, a GNSS validity duration is reported to the network device.

Alternatively, S220 may also include that the terminal reports the GNSS validity duration to the network device based on the logical channel priority of the GNSS validity duration MAC CE.

For example, S220 may be independently realized as an embodiment; or, S220 may be realized as an embodiment in combination with S210, in which S210 is performed before S220. Alternatively, S220 may be realized as an embodiment in combination with S210 and S211, in which S210 and S211 is performed before S220. Alternatively, S220 may be realized as an embodiment in combination with S211, in which S211 is performed before S220.

For example, the logical channel priority of the GNSS validity duration MAC CE in the embodiments of the disclosure may refer to a relevant explanation in above embodiments, such as referring to explanations for the logical channel priority of the GNSS validity duration MAC CE at S210 and S211.

Alternatively, the MAC layer transmits the MAC PDU to the PHY, and the PHY sends the MAC PDU in a specified channel to the network device.

For example, the terminal obtains the GNSS positioning fix and a GNSS validity duration of the GNSS positioning fix. The GNSS validity duration is obtained by the terminal in accordance with a pre-configured way of the GNSS system. For example, the terminal obtains the GNSS validity duration from a GPS module of the terminal.

For example, embodiments of the disclosure respectively provide multiple triggering conditions and reporting ways for the terminal reporting the GNSS validity duration. The multiple triggering conditions and the reporting ways may be combined arbitrarily.

For example, for a triggering condition that the terminal reports the GNSS validity duration, embodiments of the disclosure provide at least one of following two conditions.

1) The terminal triggers reporting of the GNSS validity duration after obtaining a latest GNSS positioning fix.

For example, the terminal sends the GNSS validity duration to the network device in the case that the terminal obtains the GNSS positioning fix.

2) The network device indicates the terminal whether to report the GNSS validity duration via a system message and/or an RRC dedicated message. The terminal reports the GNSS validity duration after receiving an indication from the network device.

For example, the terminal receives a first indication sent by the network device via the system message; and/or, the terminal receives a first indication sent by the network device via an RRC dedicated message, in which the first indication is configured to indicate the terminal to report the GNSS validity duration, or the first indication is configured to indicate the terminal not to report the GNSS validity duration. The terminal sends the GNSS validity duration to the network device in response to the first indication indicating the terminal to report the GNSS validity duration.

For example, for the reporting way that the terminal reports the GNSS validity duration, embodiments of the disclosure provide following two ways.

1) The terminal performs reporting in an msg5 of a random access process.

For example, the terminal sends the random access message (msg5) to the network device, in which the random access message includes the GNSS validity duration.

In detail, the GNSS validity duration may be carried in a connection establishment completed/ connection recovery completed/connection reconstruction completed message.

That is, the terminal sends the connection establishment completed/connection recovery completed/connection reconstruction completed message to the network device, in which the connection establishment completed/connection recovery completed/connection reconstruction completed message includes the GNSS validity duration.

2) The terminal performs reporting via a dedicated RRC message after the terminal enters a connected state.

In detail, the terminal may report the GNSS validity duration via a terminal auxiliary information message. Alternatively, the terminal reports the GNSS validity duration via a terminal information response message after the network device requests the terminal to report the GNSS validity duration in a terminal information request.

For example, the terminal sends a dedicated RRC message to the network device, in which the dedicated RRC message includes the GNSS validity duration.

For example, the terminal receives the terminal information request sent by the network device, in which the terminal information request is used to request the terminal to report the GNSS validity duration. The terminal responds to the terminal information request and sends a terminal information response to the network device, in which the terminal information response includes the GNSS validity duration.

In conclusion, with the technical solution in the embodiments of the disclosure, by defining a ranking way of the logical channel priority of the GNSS validity duration MAC CE, the MAC PDU is generated by performing LCP based on the logical channel priority of the GNSS validity duration MAC CE, thus realizing reporting the GNSS validity duration to the network device.

With the technical solution in the embodiments of the disclosure, a solution is provided for reporting the GNSS validity duration. The multiple triggering conditions and reporting ways are provided for the terminal to report the GNSS validity duration, thus improving a processing mechanism related to GNSS validity.

For example, the disclosure also provides an exemplary embodiment where a terminal generates the data unit based on the logical channel priority of the GNSS validity duration MAC CE.

Please refer to FIG. 8, which is a flow chart illustrating a method for determining a logical channel priority according to an embodiment of the disclosure. The embodiment takes that the method is applied to the terminal in the communication system illustrated in FIG. 1 or FIG. 2 as an example for illustration. The method may include the following.

At S210, a logical channel priority of a GNSS validity duration MAC CE is determined.

At S211, a data unit is generated based on the logical channel priority of the GNSS validity duration MAC CE.

For example, S210 and S211 in the embodiments may refer to relevant descriptions for S210 and S211 in any one of the above embodiments.

In conclusion, with the technical solution in the embodiments, by defining the logical channel priority of the GNSS validity duration MAC CE, the terminal may generate the data unit by performing LCP based on the logical channel priority of the GNSS validity duration MAC CE, which facilitates the terminal to generate the data unit by handling various types of data to be transmitted based on the logical channel priority.

For example, the disclosure also provides an exemplary embodiment where a terminal reports the GNSS validity duration to a network device.

Please refer to FIG. 9, which is a flow chart illustrating a method for determining a logical channel priority according to an embodiment of the disclosure. The embodiment takes that the method is applied to the terminal in the communication system illustrated in FIG. 1 or FIG. 2 as an example for illustration. The method may include the following.

At S211, a data unit is generated based on the logical channel priority of the GNSS validity duration MAC CE.

At S220, a GNSS validity duration is reported to the network device.

For example, the terminal sends the data unit to the network device via an RRC message, in which the data unit includes the GNSS validity duration MAC CE; or, the terminal sends the data unit to the network device via a random access message, in which the data unit includes the GNSS validity duration MAC CE.

For example, S211 and S220 in the embodiment may refer to relevant descriptions for S211 and S220 in any one of the above embodiments.

In conclusion, with the technical solution in the embodiments of the disclosure, by defining a ranking way of the logical channel priority of the GNSS validity duration MAC CE, the MAC PDU is generated by performing LCP based on the logical channel priority of the GNSS validity duration MAC CE, thus realizing reporting the GNSS validity duration to the network device.

For an LCP process:
In an alternative embodiment, an UE configures a priority (or "logical channel priority") of the GNSS validity duration MAC CE to be lower than a logical channel priority of an MAC CE for a C-RNTI or data from an UL-CCCH.

In another alternative embodiment, the UE configures a logical channel priority of the GNSS validity duration MAC CE to be lower than or equal to a logical channel priority of an MAC CE for a TAR.

In another alternative embodiment, the UE configures a logical channel priority of the GNSS validity duration MAC CE to be lower than or equal to a logical channel priority of an MAC CE for a BSR, with exception of a BSR included for padding.

In another alternative embodiment, the UE configures a logical channel priority of the GNSS validity duration MAC CE to be lower than or equal to a logical channel priority of data from any logical channel except the data from the UL-CCCH.

In another alternative embodiment, the UE configures a logical channel priority of the GNSS validity duration MAC CE to be lower than or equal to a logical channel priority of an MAC CE for a sidelink BSR for padding.

In another alternative embodiment, the UE configures a logical channel priority of the GNSS validity duration MAC CE to be greater than or equal to a logical channel priority of an MAC CE for a sidelink BSR for padding.

In another alternative embodiment, the UE configures a logical channel priority of the GNSS validity duration MAC CE to be greater than or equal to a logical channel priority of an MAC CE for a recommended bit rate query.

In another alternative embodiment, the UE configures a logical channel priority of the GNSS validity duration MAC CE to be greater than or equal to a logical channel priority of data from any logical channel except the data from the UL-CCCH.

In another alternative embodiment, the UE configures a logical channel priority of the GNSS validity duration MAC CE to be greater than or equal to a logical channel priority of an MAC CE for a sidelink BSR, with exception of a sidelink BSR included for padding.

In another alternative embodiment, the UE configures a logical channel priority of the GNSS validity duration MAC CE to be a logical channel priority of an MAC CE for a PHR, an extended PHR, or a dual connectivity PHR.

In another alternative embodiment, the UE configures a logical channel priority of the GNSS validity duration MAC CE to be greater than or equal to a logical channel priority of an MAC CE for a BSR, with exception of a BSR included for padding.

In another alternative embodiment, the UE configures a logical channel priority of the GNSS validity duration MAC CE to be greater than or equal to a logical channel priority of an MAC CE for a TAR.

In conclusion, with the technical solution in the embodiments, by defining the logical channel priority of the GNSS validity duration MAC CE, the terminal may generate the MAC PDU by performing LCP based on the logical channel priority of the GNSS validity duration MAC CE, thus realizing reporting the GNSS validity duration to the network device.

It needs to be noted that, without any conflict, various embodiments of the present application may be combined with other embodiments, steps from other embodiments, or subordinate elements of steps from other embodiments. Moreover, an order of the method and the steps in the embodiments of the disclosure may be appropriately adjusted, and steps may be added or omitted based on a condition. Those skilled in the art familiar to the technical field may easily think of changes in the technical scope disclosed by the disclosure, which shall be covered by the protection scope of the disclosure, and detailed details are not repeated herein.

The following describes apparatus embodiments in the disclosure, which may be used to perform the method embodiments of the disclosure. For details not disclosed in the apparatus embodiments, please refer to the method embodiments of the disclosure.

Please refer to FIG. 10, which illustrate a block diagram of an apparatus for determining a logical channel priority according to an embodiment of the disclosure. The apparatus has functions of realizing the method embodiments in a terminal side as described above. The functions may be realized by hardware, or by hardware executing corresponding software. The apparatus may be the terminal introduced above, or may be set in the terminal. This apparatus may include:
a determining module 301, configured to determine a logical channel priority of a GNSS validity duration MAC CE.

In an alternative embodiment, the logical channel priority of the GNSS validity duration MAC CE is lower than a logical channel priority of an MAC CE for a C-RNTI;
and/or, the logical channel priority of the GNSS validity duration MAC CE is lower than a logical channel priority of UL-CCCH data.

In an alternative embodiment, the logical channel priority of the GNSS validity duration MAC CE is lower than or equal to a logical channel priority of an MAC CE for a TAR.

In an alternative embodiment, the logical channel priority of the GNSS validity duration MAC CE is lower than or equal to a logical channel priority of an MAC CE for a BSR.

In an alternative embodiment, the logical channel priority of the GNSS validity duration MAC CE is lower than or equal to a logical channel priority of data from any logical channel except the data from the UL-CCCH.

In an alternative embodiment, the logical channel priority of the GNSS validity duration MAC CE is lower than or equal to a logical channel priority of an MAC CE for padding.

In an alternative embodiment, the MAC CE for padding includes: an MAC CE for a sidelink BSR for padding. In an alternative embodiment, the MAC CE for padding includes: an MAC CE for a BSR for padding.

In an alternative embodiment, the logical channel priority of the GNSS validity duration MAC CE is greater than or equal to a logical channel priority of an MAC CE for padding.

In an alternative embodiment, the MAC CE for padding includes: an MAC CE for a sidelink BSR for padding.

In an alternative embodiment, the MAC CE for padding includes: an MAC CE for a BSR for padding.

In an alternative embodiment, the logical channel priority of the GNSS validity duration MAC CE is greater than or equal to a logical channel priority of an MAC CE for a recommended bit rate query.

In an alternative embodiment, the logical channel priority of the GNSS validity duration MAC CE is greater than or equal to a logical channel priority of data from any logical channel except the data from the UL-CCCH.

In an alternative embodiment, the logical channel priority of the GNSS validity duration MAC CE is greater than or equal to a logical channel priority of an MAC CE for a sidelink BSR.

In an alternative embodiment, the logical channel priority of the GNSS validity duration MAC CE is greater than or equal to a logical channel priority of an MAC CE for reporting a PH.

In an alternative embodiment, the MAC CE for reporting the PH includes at least one of: an MAC CE for a PHR, an extended PHR, or a dual connectivity PHR.

In an alternative embodiment, the logical channel priority of the GNSS validity duration MAC CE is greater than or equal to a logical channel priority of an MAC CE for a BSR.

In an alternative embodiment, the logical channel priority of the GNSS validity duration MAC CE is greater than or equal to a logical channel priority of an MAC CE for a TAR. In an alternative embodiment, the apparatus further includes:
a generating module 302, configured to generate a data unit based on the logical channel priority of the GNSS validity duration MAC CE.

In an alternative embodiment, the data unit includes an MAC PDU.

For example, the apparatus is configured to execute steps executed by the terminal in the method as illustrated in any one of the above embodiments. Description in the method embodiments are also applicable to the apparatus.

One point to be noted is that when the functions are implemented by the apparatus in the above embodiments, a division of above functional modules is merely for an illustrative purpose. In an actual application, based on an actual requirement, the above functions may be assigned to be completed by different functional modules, that is, a content structure of the apparatus may be divided into different functional modules to achieve all or some of the functions described above.

For the apparatus in the above embodiments, detailed implementations in which each module performs an operation has been described in detail in the method embodiments, which is not repeated here.

Please refer to FIG. 11, which illustrates a block diagram of a communication device (terminal or network device) according to an embodiment of the disclosure. The communication device may include: a processor 901, a receiver 902, a transmitter 903, a memory 904 and a bus 905.

The processor 901 includes one or more processing cores. The processor 901 executes software programs and modules to perform various functional applications and determine the logical channel priority.

The receiver 902 and the transmitter 903 may be realized as a transceiver 906. The transceiver 906 may be a communication chip.

The memory 904 is connected to the processor 901 via the bus 905.

The memory 904 may be used to store a computer program. The processor 901 is configured to execute the computer program to realize various steps executed by the communication device in the above method embodiments.

In addition, the memory 904 may be implemented by any type of volatile or nonvolatile storage devices or a combination thereof. The volatile or nonvolatile storage device includes, but not limited to: a random access memory (RAM) and a read-only memory (ROM), an erasable programmable read-only memory (EPROM), an electrically erasable programmable read-only memory (EEPROM), a flash memory or other solid storage technologies, a compact disc read-only memory (CD-ROM), a digital video disc (DVD) or other optical storages, a tape cartridge, a tape, a disk storage or other magnetic storage devices.

When the communication device is realized as a terminal, the processor 901 in the embodiments of the disclosure may execute the steps executed by the terminal in the method illustrated in any one of the above embodiments. Description in the method embodiments is also applicable to the communication device, which is not repeated herein.

In a possible implementation, when the communication device is realized as a terminal,
the processor is configured to determine a logical channel priority of a GNSS validity duration MAC CE.

Embodiments of the disclosure also provide a computer-readable storage medium for storing a computer program. When the computer program is executed by a processor, the method for determining the logical channel priority in the terminal side is realized. For example, the computer program is configured to be run by the terminal to realize steps in any one of the methods in the above embodiments. Description in the method embodiments is also applicable to the computer program.

Alternatively, the computer-readable storage medium may include: a read-only memory (ROM), a random-access memory (RAM), a solid state drive (SSD), or an optical disc, etc. The RAM may include a resistance random access memory (ReRAM) and a dynamic random access memory (DRAM).

Embodiments of the disclosure also provide a chip, including programmable logic circuits and/or program instructions. When the chip is run in the terminal, the method for determining the logical channel priority in the terminal side is realized. For example, the chip is configured to realize the steps executed by the terminal in the method illustrated in any one of the above embodiments. Description in the method embodiments is also applicable to the chip.

Embodiments of the disclosure also provide a computer program product or a computer program. The computer program product or computer program includes computer instructions. The computer instructions are stored in a computer-readable storage medium. A processor of the terminal reads and executes the computer instructions from the computer-readable storage medium, to realize the method for determining the logical channel priority on the terminal side. For example, the computer program product or the computer program is configured to be run by the terminal to realize steps in the method illustrated in any one of the above embodiments. Description in the method embodiments is also applicable to the computer program product or the computer program.

It may also be understood that a term "indicate" in the embodiments of the disclosure may refer to "directly indicate" or "indirectly indicate", or may indicate an association relationship. For example, A indicating B means that A directly indicates B, for example, B may be obtained based on A; or means that A indirectly indicates B, for example, A indicates C, and B may be obtained based on C; or means that that A have an association relationship with B.

In the description of embodiments of the disclosure, a term "correspond to" may represents that there is a direct or indirect correspondence between two objects, or represents that there is an association relationship between the two objects, or may represent an indicating and indicated relationship or a configuring and configured relationship.

A term herein "multiple" refers to two or more. Terms "and/or" describe an association relationship of associated objects, representing that there may be three kinds of relationships. For example, A and/or B may represent three cases, that is, A alone, A and B simultaneously, and B alone. The character "/" generally represents that context objects are an "or" relationship.

In addition, numbers of the steps described in the application merely exemplarily illustrate a possible order of execution between the steps. In some other embodiments, the above steps may also be executed in a manner not following the number. For example, two steps with different numbers may be executed simultaneously, or two steps with different numbers may be executed in an opposite order compared with the order illustrated in the drawings, which is not limited in embodiments of the disclosure.

Those skilled in the art may realize that in one or more of the above examples, the functions described in embodiments of the disclosure may be realized using hardware, software, firmware, or any combination thereof. When the functions are realized using the software, the functions may be stored on a computer-readable medium or transmitted as one or more instructions or codes in a computer-readable medium. The computer-readable medium includes a computer storage medium and a communication medium, in which the communication medium includes any medium capable of facilitating transmission of the computer program from one place to another. The storage medium may be any available medium that a general or specialized computer may access.

The above description is only exemplary embodiments of the disclosure, which is not used to limit the disclosure. Any modification, equivalent replacement, improvement and the like made within the spirit and principle of the disclosure should be included in the protection scope of the disclosure.

## Claims

1. A method for determining a logical channel priority, performed by a terminal, comprising:
determining a logical channel priority of a global navigation satellite system (GNSS) validity duration medium access control control element (MAC CE).

2. The method of claim 1, wherein the logical channel priority of the GNSS validity duration MAC CE is lower than a logical channel priority of an MAC CE for a cell radio network temporary identity (C-RNTI); and/or,
the logical channel priority of the GNSS validity duration MAC CE is lower than a logical channel priority of data from an uplink common control channel (UL-CCCH).

3. The method of claim 1 or 2, wherein the logical channel priority of the GNSS validity duration MAC CE is lower than or equal to a logical channel priority of an MAC CE for a timing advance report (TAR).

4. The method of any one of claims 1 to 3, wherein the logical channel priority of the GNSS validity duration MAC CE is lower than or equal to a logical channel priority of an MAC CE for a buffer status report (BSR).

5. The method of any one of claims 1 to 4, wherein the logical channel priority of the GNSS validity duration MAC CE is lower than or equal to a logical channel priority of data from any logical channel except the data from the UL-CCCH.

6. The method of any one of claims 1 to 5, wherein the logical channel priority of the GNSS validity duration MAC CE is lower than or equal to a logical channel priority of an MAC CE for padding.

7. The method of claim 6, wherein the MAC CE for padding comprises: an MAC CE for a sidelink BSR for padding.

8. The method of claim 6, wherein the MAC CE for padding comprises: an MAC CE for a BSR for padding.

9. The method of any one of claims 1 to 5, wherein the logical channel priority of the GNSS validity duration MAC CE is greater than or equal to a logical channel priority of an MAC CE for padding.

10. The method of claim 9, wherein the MAC CE for padding comprises: an MAC CE for a sidelink BSR for padding.

11. The method of claim 9, wherein the MAC CE for padding comprises: an MAC CE for a BSR for padding.

12. The method of any one of claims 1 to 11, wherein the logical channel priority of the GNSS validity duration MAC CE is greater than or equal to a logical channel priority of an MAC CE for a recommended bit rate query.

13. The method of any one of claims 1, 2, 3, 4, 6, 7, 8, 9, 10, 11 and 12, wherein the logical channel priority of the GNSS validity duration MAC CE is greater than or equal to a logical channel priority of data from any logical channel except the data from the UL-CCCH.

14. The method of any one of claims 1 to 13, wherein the logical channel priority of the GNSS validity duration MAC CE is greater than or equal to a logical channel priority of an MAC CE for a sidelink BSR.

15. The method of any one of claims 1 to 14, wherein the logical channel priority of the GNSS validity duration MAC CE is greater than or equal to a logical channel priority of an MAC CE for reporting a power headroom (PH).

16. The method of claim 15, wherein the MAC CE for reporting the PH comprises at least one of: an MAC CE for a power headroom report (PHR), an MAC CE for an extended PHR, or an MAC CE for a dual connectivity PHR.

17. The method of any one of claims 1, 2, 3, 5, 6, 7, 8, 9, 10, 11, 12, 13, 14, 15 and 16, wherein the logical channel priority of the GNSS validity duration MAC CE is greater than or equal to a logical channel priority of an MAC CE for a BSR.

18. The method of any one of claims 1, 2, 4, 5, 6, 7, 8, 9, 10, 11, 12, 13, 14, 15, 16 and 17, wherein the logical channel priority of the GNSS validity duration MAC CE is greater than or equal to a logical channel priority of an MAC CE for a timing advance report (TAR).

19. The method of any one of claims 1 to 18, further comprising:
generating a data unit based on the logical channel priority of the GNSS validity duration MAC CE.

20. The method of claim 19, wherein the data unit comprises a medium access control packet data unit (MAC PDU).

21. An apparatus for determining a logical channel priority, comprising:
a determining module, configured to determine a logical channel priority of a global navigation satellite system (GNSS) validity duration medium access control control element (MAC CE).

22. A terminal, comprising a processor,
wherein the processor is configured to determine a logical channel priority of a global navigation satellite system (GNSS) validity duration medium access control control element (MAC CE).

23. A computer-readable storage medium for storing a computer program, wherein when the computer program is executed by a processor, the method for determining a logical channel priority of any one of claims 1 to 20 is realized.

24. A chip, comprising programmable logic circuits and/or program instructions,
wherein the method for determining a logical channel priority of any one of claims 1 to 20 is realized when the chip is run.

25. A computer program product or a computer program, comprising computer instructions, wherein the computer instructions are stored in a computer-readable storage medium, and a processor is configured to implement the method for determining a logical channel priority of any one of claims 1 to 20 when reading and executing the computer instructions from the computer-readable storage medium.
